# FASCICULE DE BREVET EUROPEEN

(11) **EP 3 558 882 B1**
(45) Date de publication et mention de la délivrance du brevet: **30.09.2020**
(21) Numéro de dépôt: 17832276.4
(22) Date de dépôt: 21.12.2017
(51) Int. Cl.: C03B 37/04

(54) **DISPOSITIF DE CENTRIFUGATION INTERNE POUR LA FORMATION DE FIBRES**
INTERNE ZENTRIFUGIERENDE VORRICHTUNG ZUR FORMUNG VON FASERN
INTERNAL CENTRIFUGING DEVICE FOR THE FORMATION OF FIBERS

(30) Priorité: 21.12.2016 FR 1663030
(43) Date de publication de la demande: 30.10.2019
(73) Titulaire: SAINT-GOBAIN ISOVER, 92400 Courbevoie (FR)
(72) Inventeur: MASSOT, Philippe, 60200 Compiegne (FR); LEBRUN, Alain, 60130 Angivillers (FR)
(74) Mandataire: Saint-Gobain Recherche
(86) Numéro de dépôt international: PCT/FR2017/053790
(87) Numéro de publication internationale: WO 2018/115773

(56) Documents cités:
- US-A- 3 026 563
- US-A1- 2016 039 707

## Description

L'invention concerne un dispositif de centrifugation interne pour la formation de fibres, notamment de fibres minérales, en particulier de fibres de verre, et un ensemble de fibrage incorporant un tel dispositif, ainsi que le procédé de montage/démontage du dispositif.

L'invention sera plus particulièrement décrite en regard de la fabrication de fibres minérales, sans toutefois y être limitée, et s'applique à toute fabrication de fibres obtenues par centrifugation interne et étirage gazeux.

Un dispositif de centrifugation interne comprend de manière connue une assiette de fibrage, destinée à tourner à grande vitesse et percée dans sa paroi verticale périphérique d'un très grand nombre d'orifices, et un support, encore dénommé tulipe, sur lequel est fixé l'assiette de fibrage et qui est destiné à être fixé sur un arbre rotatif pour animer l'assiette de fibrage d'un mouvement rotatif.

La matière première minérale, par exemple du verre fondu, s'écoule à l'intérieur de l'arbre rotatif jusque dans l'assiette de fibrage. Sous l'effet de la rotation, la matière minérale s'échappe de l'assiette de fibrage par centrifugation via les orifices pour former des filaments qui, sous l'effet de moyens d'étirage, s'étirent en fibres. Elles sont généralement rabattues vers un tapis de réception grâce à des moyens de soufflage.

L'assiette peut être pourvue d'un fond ou bien être sans fond. Dans le cas où l'assiette ne comporte de pas de fond, le dispositif de centrifugation comprend en outre un panier, également percé d'orifices à sa périphérie, qui est logé à l'intérieur de l'assiette de fibrage. Le panier est destiné à accueillir le verre fondu qui s'écoule depuis l'intérieur de l'arbre rotatif. Ce verre fondu sera ensuite projeté via les orifices du panier vers la périphérie de l'assiette de fibrage pour alimenter les orifices de l'assiette de fibrage.

La tulipe comprend un corps cylindrique creux, ou moyeu, destiné à être fixé autour de l'arbre rotatif, et une base circulaire ou jante solidaire de l'une des extrémités du moyeu et dont la face opposée au moyeu reçoit l'assiette et, le cas échéant, le panier par boulonnage. L'assiette et, le cas échéant, le panier sont ainsi positionnés au droit du moyeu.

Un tel dispositif de centrifugation interne, combiné à des moyens d'étirage, permet la fabrication de fibres, notamment de fibres minérales, en particulier de fibres de verre. L'arbre creux tournant à grande vitesse entraîne, via la tulipe, l'assiette de fibrage et, le cas échéant, le panier, tandis que du verre fondu s'écoule à l'intérieur de l'arbre creux jusqu'au panier ou directement jusqu'à l'assiette s'il s'agit d'une assiette avec fond. Le verre se répand dans le panier, qui projette le verre fondu sur la paroi périphérique interne de l'assiette dotée d'orifices, ou bien directement dans l'assiette. Le verre sort de l'assiette à travers ses orifices sous forme de filaments. Les filaments sont alors soumis à l'action d'un courant d'étirage, par exemple un courant annulaire d'étirage gazeux, à température et vitesse élevées, longeant la paroi externe de l'assiette, engendrant ainsi l'amincissement des filaments pour les transformer en fibres. Enfin, les fibres formées sont entraînées par le courant d'étirage et/ou des moyens de soufflage vers un dispositif de réception.

Cet état de l'art nécessite un centrage du filet de verre fondu par rapport à l'arbre pour assurer une bonne homogénéité de répartition le long de la partie intérieure et inférieure de l'arbre et éviter son « enverrage » par contact du verre avec la paroi. On appelle « enverrage » la solidification rapide du verre à l'intérieur de l'arbre après qu'une amorce ait été créée par contact du verre fondu sur la paroi froide de l'arbre, ce qui empêche alors le fibrage.

De plus, la tulipe doit être positionnée en hauteur de manière contrôlée autour de l'arbre pour établir une distance idoine entre l'assiette de fibrage et les moyens d'étirage gazeux, cette distance influant sur les caractéristiques de fibrage et filaments obtenus.

Aujourd'hui, la tulipe est fixée sur l'arbre par vissage du moyeu, le moyeu possédant un taraudage intérieur tandis que l'arbre est doté d'un filetage extérieur.

La fixation par vissage soulève quelques inconvénients. En effet, au cours de l'utilisation durant laquelle l'arbre tourne à très grande vitesse, le risque de dévissage est constant. Or, il n'existe aucun système antichute en cas de dévissage. De plus, cette fixation par vissage sur l'arbre engendre au cours du temps des contraintes mécaniques sur l'arbre, que l'on cherche constamment à réduire pour augmenter la durée de vie du dispositif. Enfin, ce montage par vissage impose une mise en oeuvre fastidieuse du réglage de la distance de séparation entre l'assiette et les moyens d'étirage, nécessitant plusieurs étapes dont l'agencement de cales de hauteur entre l'extrémité inférieure de l'arbre et la collerette de fond du moyeu, le vissage du moyeu et le contrôle de la distance ; et si ce n'est pas la bonne distance, il est alors nécessaire de dévisser, ôter ou ajouter des cales de hauteur, revisser, re-contrôler et ainsi de suite jusqu'à obtenir le réglage idoine correspondant à la distance ad hoc.

Le document US3026563 décrit un dispositif de centrifugation interne pour la formation de fibres en matériau se ramollissant à la chaleur, comportant une assiette de fibrage dotée d'une paroi périphérique percée d'une pluralité d'orifices, un support de l'assiette de fibrage dénommé tulipe, la tulipe comprenant un corps cylindrique creux ou moyeu et une jante en forme de disque autour de l'extrémité inférieure du moyeu, et des moyens de fixation agencés sur le moyeu et destinés à la fixation de la tulipe sur un arbre apte à être rotatif.

L'invention a donc pour but d'obvier aux inconvénients précités en proposant un dispositif de centrifugation interne dont la fixation est assurée au cours du temps sans risque de chute de la tulipe, de montage aisé tout en facilitant un réglage simple et rapide de la distance assiette-moyens d'étirage, de démontage également aisé, et de durée de vie accrue.

Selon l'invention, le dispositif de centrifugation interne pour la formation de fibres, destiné à être monté dans un ensemble de fibrage, comporte une assiette de fibrage dotée d'une paroi périphérique percée d'une pluralité d'orifices, un support de l'assiette de fibrage dénommé tulipe, la tulipe comprenant un corps cylindrique creux ou moyeu et une jante en forme de disque autour de l'extrémité inférieure du moyeu, ainsi que des moyens de fixation agencés sur le moyeu et destinés à la fixation de la tulipe sur un arbre apte à être rotatif, les moyens de fixation comportant au moins deux éléments mâles isolés, coplanaires, en saillie de la paroi intérieure du moyeu et constituant des moyens de retenue et de verrouillage mécanique du dispositif sur l'arbre en position d'utilisation, chaque élément mâle étant destiné à coopérer (sans vissage) avec un élément femelle de l'arbre ou avec un élément femelle d'une bague d'interface solidaire de l'arbre, par insertion de chaque élément mâle dans un élément femelle, le dispositif comportant en outre des moyens élastiques permettant le déverrouillage du dispositif par rapport à l'arbre.

On entend par « isolés », des éléments distants l'un de l'autre, des éléments qui ne s'étendent pas en continu sur une surface périphérique.

Ainsi, le dispositif de centrifugation interne de l'invention procure par une coopération mécanique mâle-femelle sans vissage et constituant un système de verrouillage, un montage simple et rapide et garantit un verrouillage du dispositif sans risque de désassemblage, le déverrouillage pour assurer le désassemblage de la tulipe de l'arbre ne pouvant être exercé que par la sollicitation des moyens élastiques.

On entend par « moyens élastiques permettant le déverrouillage du dispositif », des moyens qui assurent le désengagement de chaque élément mâle hors de l'élément femelle et/ou empêchent tout nouveau verrouillage une fois l'élément mâle désengagé, ce dernier désengagement pouvant être obtenu autrement que par les moyens élastiques.

Dans la suite de la description le terme de « hauteur », les qualificatifs « supérieur », « inférieur », « haut » et « bas » d'un élément du dispositif sont utilisés dans le cadre d'une installation normale du dispositif, c'est-à-dire relatif à une notion verticale par rapport à un plan horizontal depuis lequel serait suspendu le dispositif.

Dans la suite de la description, le terme « intérieur » s'entend en qualifiant des éléments orientés vers le centre du dispositif et vers l'arbre, tandis que le terme « extérieur » qualifie une orientation opposée.

Selon une caractéristique, les moyens de fixation sont des pièces de fixation se présentant sous la forme de cliquets.

On entend par « cliquet », une pièce qui est dotée d'un élément qui fait saillie du reste du corps de la pièce et constitue un élément mâle destiné à sa coopération avec un élément femelle parmi une pluralité d'éléments femelles agencés successivement les uns par rapport aux autres, la coopération successive de l'élément mâle avec un élément femelle ne pouvant se faire que dans un seul sens sans pouvoir revenir en sens inverse, assurant ainsi un verrouillage du dispositif. Les éléments femelles sont par exemple les creux d'une surface crantée, telle qu'une crémaillère.

Dans un mode de réalisation préféré, la coopération d'engagement des éléments mâles correspond ainsi à un système à cliquets.

Dans le système de coopération à cliquets, le montage du dispositif de centrifugation se fait par un mouvement de translation de bas en haut de la tulipe autour de l'arbre. Le démontage se fait par poussée des cliquets sur leur partie opposée pour assurer un désengagement hors des éléments femelles, les moyens élastiques permettant de bloquer en rotation les cliquets afin d'éviter leur réengagement dans lesdits éléments femelles, puis une translation de haut en bas de la tulipe est effectuée pour la retirer de l'arbre.

D'autres moyens de fixation, qui fonctionnent selon une coopération par engagement mutuel d'éléments mâle-femelle isolés tout en fournissant un verrouillage et par des moyens élastiques qui assurent le déverrouillage ou empêchent tout nouveau verrouillage, peuvent être envisagés. Par exemple, une variante de réalisation qui n'est pas préférée, est un système de coopération à baïonnette ; le montage se fait par des mouvements de translation de bas en haut de la tulipe et de rotation pour engager les éléments mâles dans les éléments femelles, le démontage se fait par poussée élastique sur les éléments mâles pour assurer leur désengagement puis par rotation en sens inverse et translation de haut en bas.

Selon une autre caractéristique du dispositif, les moyens de fixation comportent au moins deux éléments mâles coplanaires, de préférence trois ou au moins trois, répartis à équidistance autour du moyeu (le corps du moyeu intégrant directement les éléments mâles), ou au moins deux pièces de fixation, de préférence trois ou au moins trois, réparties à équidistance sur la périphérie du moyeu, chaque pièce comprenant un élément mâle de retenue et verrouillage (les éléments mâles sont solidaires de pièces de fixation qui sont associées au moyeu).

Selon un mode de réalisation préféré, chaque pièce de fixation est montée apte à être pivotante dans l'épaisseur du moyeu, le moyeu comportant des lumières pour le logement des pièces, chaque pièce étant apte à adopter deux positions, soit une position de repos, dite position fermée, pour laquelle la pièce est parallèle au corps longitudinal du moyeu, soit une position basculée, dite position ouverte, pour laquelle la pièce est pivotée et est angulairement orientée par rapport à l'axe longitudinal du moyeu, dans une direction opposée à l'axe. Les lumières permettent aux pièces de faire saillie des deux côtés intérieur et extérieur de la paroi du moyeu.

Le pivotement de chaque pièce de fixation est réalisé au niveau de sa partie inférieure.

La position fermée des pièces conduit, lors de la montée du dispositif sur l'arbre, à la coopération de chaque élément isolé mâle des pièces de fixation avec un élément femelle correspondant de l'arbre ou de la bague d'interface, retenant en position le dispositif.

En position fermée, l'élément mâle de chaque pièce de fixation se trouve dans un plan perpendiculaire à l'axe longitudinal du moyeu.

L'arbre ou la bague d'interface de l'ensemble de fibrage comporte en tant qu'éléments femelles une pluralité de rainures disposées selon un pas régulier dans des plans perpendiculaires à l'axe longitudinal de l'arbre/la bague, les éléments mâles en position fermée coopérant avec une ou des rainures coplanaires des pièces de fixation (position de retenue des pièces). Dans un exemple de réalisation, pour chacun des plans successifs, l'arbre/la bague comporte une seule rainure circulaire usinée sur toute la périphérie de l'arbre/la bague. Dans un exemple préféré de réalisation, l'arbre/la bague comporte plusieurs rainures usinées et réparties à intervalles réguliers circulairement pour recevoir en correspondance chacun des éléments mâles.

La position ouverte des pièces de fixation conduit au désengagement des éléments mâles hors de l'élément femelle correspondant.

En position ouverte, l'élément mâle de chaque pièce de fixation pivotante se trouve dans une direction inclinée de manière divergente par rapport à l'axe longitudinal du moyeu de sorte que l'élément mâle ne fait plus saillie par rapport à la paroi intérieure du moyeu.

Chaque pièce de fixation présente un corps oblong et comporte en son extrémité inférieure une traverse inférieure en saillie du corps et constituant l'élément mâle, de préférence en présentant une section en pointe.

Le corps de chaque pièce de fixation comporte en outre un moyen de blocage de la pièce en position ouverte lorsque la pièce est basculée jusqu'à une certaine position angulaire. Le moyen de blocage est par exemple un ergot positionné sur la face inférieure et à distance de l'élément mâle.

Tant que la pièce n'est pas basculée jusqu'à la position angulaire de blocage, celle-ci peut revenir en position fermée ; cela permet à la pièce de se comporter comme un cliquet, à savoir que lors du montage du dispositif et selon la hauteur d'agencement voulue, les éléments mâles des pièces de fixation sont engagés dans la première rainure (la plus inférieure) puis le dispositif est monté d'un pas supplémentaire de sorte que les pièces de fixation en tant que cliquets s'introduisent dans la rainure suivante et ainsi de suite, jusqu'à atteindre la hauteur souhaitée.

Selon une autre caractéristique, les moyens élastiques de déverrouillage consistent en un ressort associé à chaque pièce de fixation et apte à maintenir la pièce de fixation en position ouverte après son pivotement selon un certain angle via une coopération avec un élément de blocage du type ergot. Le ressort se présente sous la forme d'une lame avec un béquet, l'ergot étant apte à passer derrière le béquet après le pivotement de la pièce de fixation selon un certain angle et le béquet retenant alors la pièce ouverte par butée de l'ergot contre le béquet.

Avantageusement, chaque pièce de fixation comporte en son extrémité supérieure une surface biseautée servant de surface d'appui destinée à coopérer avec une butée supérieure solidaire de l'arbre ou de la bague d'interface. Cette surface biseautée, en venant en appui contre la butée supérieure, permettra de basculer la pièce de fixation en position ouverte.

L'invention est également relative à un ensemble de fibrage comprenant un arbre creux apte à tourner à grande vitesse et un dispositif de centrifugation interne selon l'invention, le dispositif étant fixé via la tulipe soit directement sur l'arbre soit au moyen d'une bague d'interface, elle-même vissée autour de l'arbre, l'arbre ou la bague d'interface comportant sur leur paroi extérieure des éléments femelles coopérant avec les éléments mâles.

La bague d'interface permet de pouvoir monter le dispositif de centrifugation de l'invention sur un arbre d'un ensemble de fibrage déjà existant qui ne présente pas la surface de coopération ad hoc aux formes des éléments mâles. En effet, usuellement, un dispositif de centrifugation est monté par vissage autour de l'arbre qui est uniquement fileté.

De préférence, les éléments femelles de la bague d'interface ou de l'arbre (si la tulipe est directement fixée sur l'arbre) forment une surface crantée, du type à crémaillère ou en dents de scie, la surface crantée étant en particulier pourvue d'une alternance de dents et de creux parallèles et de direction transversale à l'axe longitudinal de la bague ou de l'arbre, les creux formant les éléments femelles.

Les éléments femelles sont disposés selon un pas constant dans des plans perpendiculaires à l'axe longitudinal de l'arbre ou de la bague, chaque plan comprenant soit un élément femelle continu circulaire, soit plusieurs éléments femelles discontinus et équidistants.

Le pas des éléments femelles de plans consécutifs est constant, de préférence compris entre 1 et 2 mm, notamment de l'ordre du millimètre.

De préférence, la surface crantée s'étend selon l'axe longitudinal de la bague ou de l'arbre sur une distance de l'ordre de 15 mm.

De préférence, les dents et les creux présentent dans un plan vertical, une section à géométrie triangulaire, les pointes étant parallèles entre elles selon des plans horizontaux ou sensiblement inclinés vers le haut, tandis que les éléments mâles du dispositif de centrifugation présentent une géométrie de coopération mutuelle avec les creux.

Enfin, l'arbre ou la bague d'interface comporte sur le dessus, à distance des éléments femelles et dans un plan extérieur décalé par rapport au plan contenant lesdits éléments femelles, une gorge périphérique à concavité tournée vers le bas qui délimite un épaulement constituant une butée haute pour coopérer avec la partie supérieure des pièces de fixation, en particulier une surface supérieure biseautée des pièces de fixation de sorte à actionner le pivotement desdites pièces de fixation (cliquets).

L'invention est enfin relative à l'utilisation d'un dispositif de centrifugation interne pour la formation de fibres ou d'un ensemble de fibrage ci-dessus pour la fabrication de fibres, en particulier de fibres minérales.

La présente invention va à présent être décrite à l'aide d'exemples uniquement illustratifs et nullement limitatifs de la portée de l'invention, et à partir des illustrations ci-jointes, dans lesquelles :
- La figure 1 représente une vue en coupe verticale et radiale partielle schématique d'un ensemble pour la formation de fibres comprenant le dispositif de centrifugation de l'invention, les détails de la fixation du dispositif de centrifugation n'étant pas illustrés ;
- La figure 2 est vue en coupe partielle du dispositif de centrifugation de l'invention en position montée sur l'arbre de l'ensemble de fibrage, avec une bague d'interface entre la tulipe et l'arbre ;
- La figure 3 est une vue en perspective de la tulipe du dispositif de centrifugation avec les pièces de fixation (ici des cliquets) en position fermée ;
- La figure 4 correspond à une vue partielle en perspective des pièces de fixation en position ouverte ;
- Les figures 5a et 5b illustrent deux vues en perspective d'un cliquet ;
- La figure 6 est une vue en coupe d'un cliquet en position fermée et de verrouillage sur la bague d'interface ;
- La figure 7 est une vue de détail de la figure 6 ;
- La figure 8 est une vue en coupe d'un cliquet en position ouverte et de déverrouillage par rapport à la bague d'interface ;
- La figure 9 est une vue en perspective de la bague d'interface ;
- La figure 10 est une vue en coupe et de dessus du détail de la coopération d'un cliquet avec un élément femelle de la bague d'interface.

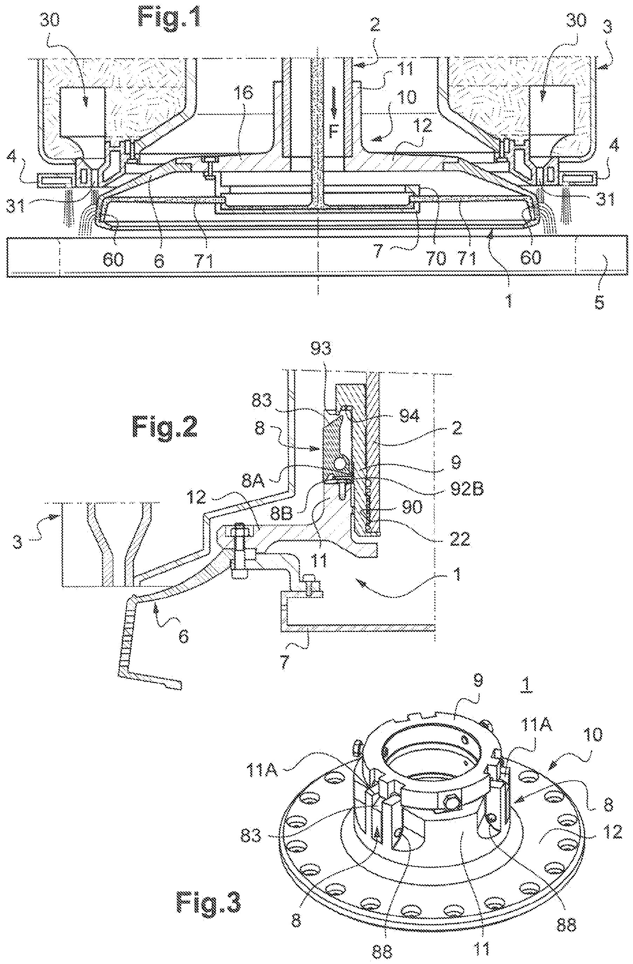

L'ensemble de fibrage représenté sur la figure 1 regroupe les divers éléments utilisés dans les techniques de production de fibres par centrifugation interne et étirage au moyen d'un courant gazeux chaud.

Cet ensemble de fibrage comporte de manière connue :
- un centrifugeur ou dispositif de centrifugation interne 1 ;
- un arbre creux 2 sur lequel est fixé le centrifugeur 1 ; l'arbre 2 et le centrifugeur 1 sont animés d'un mouvement de rotation rapide au moyen d'un moteur non représenté ;
- un brûleur 3 qui émet un courant de gaz chaud ; le courant gazeux est formé à partir de plusieurs chambres de combustion 30 réparties régulièrement autour du centrifugeur et dont les gaz de combustion produits sont conduits à proximité de la paroi périphérique du centrifugeur en s'échappant par une tuyère annulaire 31 commune à l'ensemble des diverses chambres de combustion 30 ;
- une couronne de soufflage 4 concentrique au centrifugeur ; elle engendre une nappe gazeuse à basse température qui enveloppe le courant gazeux émis par le brûleur 3 ;
- un élément de chauffage 5 à induction par haute fréquence, en forme d'anneau, qui entoure le centrifugeur 1 en sa partie inférieure pour réchauffer cette partie se trouvant la plus exposée au refroidissement au contact de l'air ambiant.

L'invention portant sur le centrifugeur 1 et sa fixation sur l'arbre 2, les autres éléments constitutifs précités de l'ensemble de fibrage ne seront pas davantage commentés.

L'arbre 2 est creux et le matériau tel que du verre destiné à former les fibres s'écoule depuis des moyens d'alimentation (four, avant-corps, filière) selon la flèche F dans l'arbre 2 jusque dans le centrifugeur 1.

Le centrifugeur 1 comprend un corps de fixation 10, dénommé usuellement « tulipe », permettant de fixer le centrifugeur à l'arbre 2, une assiette de fibrage 6, sans fond, et un panier 7. En variante (non représentée), l'assiette de fibrage est munie d'un fond ; le centrifugeur ne comporte alors pas de panier et le verre fondu tombe directement dans le fond de l'assiette de fibrage où il se répartit par centrifugation à proximité de la paroi périphérique de l'assiette de fibrage.

La tulipe 10 comprend un moyeu 11 et une jante 12 en forme de disque solidaire de l'extrémité inférieure du moyeu. En position montée du centrifugeur, la jante 12 est disposée horizontalement et en position inférieure par rapport au moyeu.

La fixation du centrifugeur 1 sur l'arbre creux 2 est assurée par le moyeu 11 et sera décrite en détail plus loin.

L'assiette de fibrage 6 est fixée à la jante 12.

Le panier 7 est logé à l'intérieur de l'assiette et est suspendu à la jante 12, au droit du moyeu 11.

Lors du procédé de fibrage, le matériau fondu étirable cheminant dans l'arbre creux 2 se répand sur le fond du panier 7. Le panier 7 est également entraîné en rotation via la fixation du centrifugeur à l'arbre rotatif 2. La rotation du panier entraîne la projection du matériau fondu sur sa paroi périphérique 70 qui est percée d'orifices et de là, la projection sous forme de filets volumineux 71. Via la force centrifuge, les filets 71 sont projetés sur la paroi périphérique 60 de l'assiette 6. Cette paroi périphérique 60 est percée de très nombreux orifices par lesquels le matériau passe en formant des filaments, dits "primaires", relativement fins. Ce sont ces filaments primaires qui sont projetés hors de l'assiette 6 du centrifugeur dans le courant gazeux émis par le brûleur 3. Sous l'action de ce courant, l'étirage des filaments primaires conduit à la formation des fibres.

Selon l'invention, le dispositif de centrifugation 1 illustré sur la figure 2 est fixé à l'arbre 2 via des pièces 8 de fixation, ces dernières étant solidaires de la tulipe 10 et agencées isolément sur le pourtour du moyeu 11, et via une bague d'interface 9.

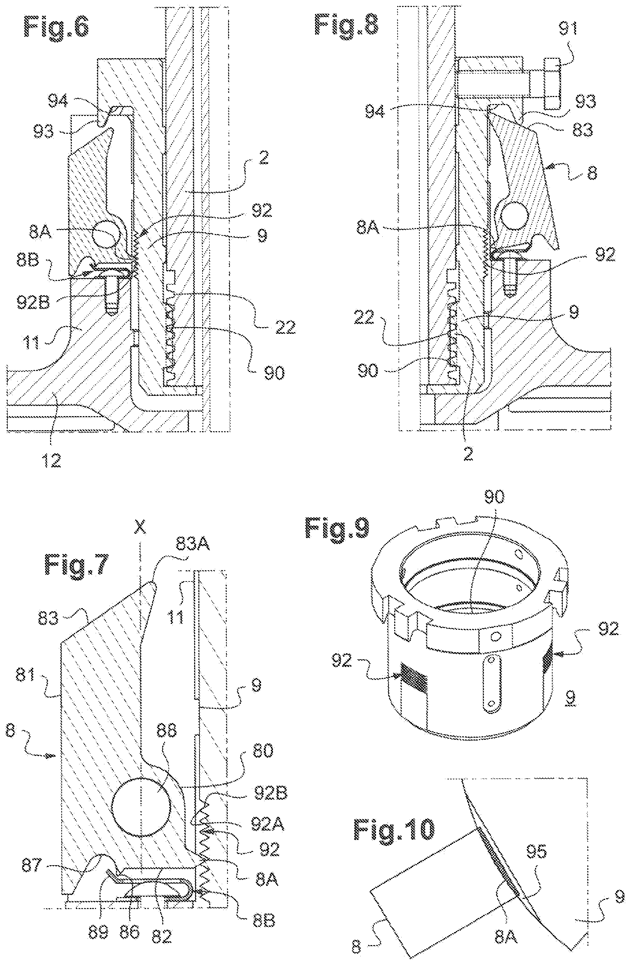

La bague d'interface 9 (illustrée également sur la figure 9) permet de pouvoir monter le dispositif de centrifugation 1 de l'invention sur l'arbre 2 d'un ensemble de fibrage existant. En effet, aujourd'hui, un dispositif de centrifugation est monté par vissage autour de l'arbre 2 qui est fileté, ce qui n'est pas le cas pour le dispositif de centrifugation de l'invention qui utilise pour la fixation les pièces 8.

La bague d'interface 9 présente une paroi intérieure taraudée ou filetée 90, telle que visible sur la vue de détail de la figure 8, pour coopérer par vissage avec le filetage ou le taraudage 22 existant de l'arbre 2 (voir figure 2).

De préférence (figure 8), une vis de serrage 91 est disposée en partie supérieure de la bague 9 et traverse son épaisseur pour être en contact avec l'arbre 2, confortant le blocage de la bague 9 sur l'arbre 2.

Selon l'invention, les pièces de fixation 8 forment des moyens de retenue et de verrouillage du dispositif de centrifugation 1 monté sur l'arbre 2, via ici la bague d'interface 9.

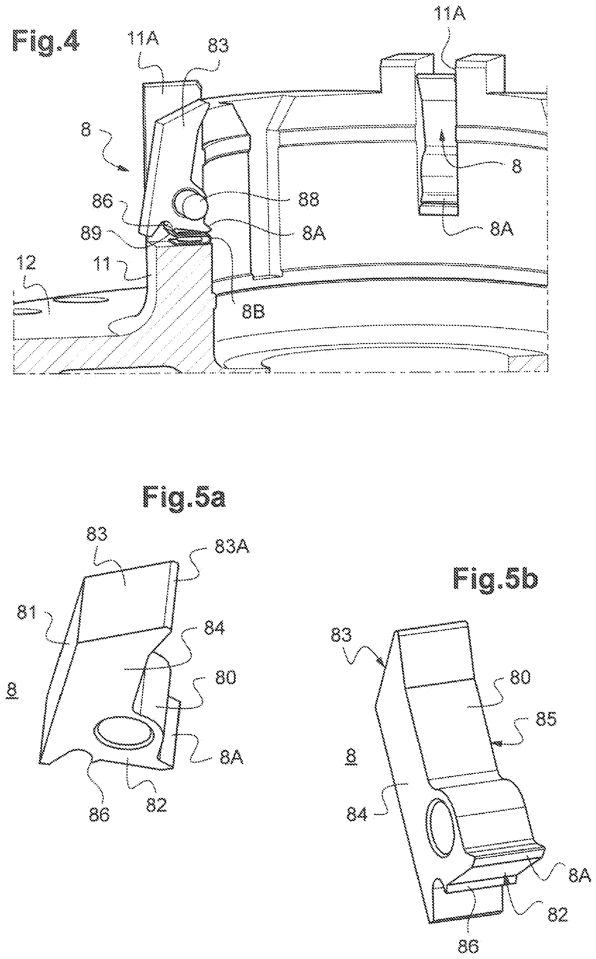

Le dispositif de centrifugation 1 comporte également des moyens de déverrouillage qui comprennent des moyens élastiques 8B (visibles plus en détail sur les figures 4 et 7) avec lesquels sont destinés à coopérer les pièces de fixation 8 pour leur blocage en position déverrouillée, comme il sera expliqué plus loin.

Les pièces de fixation 8 sont au moins au nombre de deux. Elles sont réparties uniformément sur le pourtour circulaire du moyeu 11 afin d'équilibrer en poids le centrifugeur et procurer un montage équilibré sur l'arbre.

Au regard de la figure 3, l'exemple de tulipe présenté comporte trois pièces de fixation agencées de manière équidistante, dont deux seulement sont visibles.

Les figures 2 à 7 illustrent le mode préféré de réalisation des pièces de fixation 8 ; chaque pièce se présente sous la forme d'un cliquet destiné à coopérer avec une surface crantée 92 du type à crémaillère agencée sur la bague d'interface 9, elle-même fixée à l'arbre 2.

Le mécanisme à cliquets de l'invention assure un engagement verrouillé du dispositif de centrifugation par la coopération des cliquets dans les évidements/creux de la crémaillère en regard, avec l'impossibilité de revenir dans une position précédente, ici dans une position inférieure, assurant au dispositif de centrifugation de ne pouvoir descendre et par conséquent se détacher de l'arbre.

Selon l'invention, le moyeu 11 du dispositif de centrifugation de l'invention n'est donc nullement taraudé puisque la fixation se fait via les cliquets 8.

La surface crantée 92 est usinée sur la face extérieure de la paroi de la bague d'interface 9. Bien entendu, en variante, l'arbre 2 peut être directement usiné pour comprendre, sur sa face extérieure, la surface crantée 92 afin d'une coopération directe avec les cliquets, ce qui permet de s'affranchir de la bague d'interface. L'ensemble de la description concernant cette surface crantée 92 et la coopération avec les pièces de fixation 8 est donc valable également en l'absence de bague d'interface 9.

La surface crantée 92 peut être usinée sur l'ensemble de la périphérie de la bague afin de pouvoir monter le dispositif et d'assurer une coopération avec les cliquets en s'affranchissant du positionnement de la surface crantée par rapport aux cliquets, cette surface crantée étant ainsi systématiquement en face des cliquets lors du montage du moyeu 11 autour de la bague 9.

La surface crantée 92 peut également n'être présente que de manière localisée sur le pourtour de la bague (telle qu'illustrée sur la figure 9), en formant dans des plans successifs parallèles, transversaux à l'axe cylindrique de la bague, et selon chaque plan, un nombre de rainures correspondant au nombre de cliquets. Sur la figure 10, est illustrée une rainure 95 dans un plan transversal à l'axe cylindrique de la bague d'interface 9, dans laquelle est engagé un élément mâle 8A d'un cliquet 8. Pour trois cliquets, la bague comprend alors pour chacun des plans horizontaux parallèles et équidistants, trois rainures réparties à équidistance sur le pourtour circulaire.

La surface crantée 92 s'étend sur une hauteur suffisante pour assurer le réglage en hauteur du moyeu 11 et par conséquent de l'assiette de fibrage 6 par rapport au brûleur 3. Cette hauteur est par exemple de l'ordre de 15mm.

La surface crantée 92 est du type à crémaillère, de préférence en dents de scie. Elle est pourvue (figure 7) d'une alternance de dents 92A et de creux 92B parallèles et de direction transversale à la direction axiale de la bague 9 (de l'arbre 2), les creux formant des éléments femelles pour la coopération avec les cliquets 8.

Le pas de la crémaillère, c'est-à-dire le pas entre chaque dent est de préférence compris entre 1 et 2 mm, en particulier de l'ordre du millimètre, pour assurer une précision optimale de réglage de la hauteur du moyeu 11 et donc de la distance séparant l'assiette de fibrage du brûleur.

Un cliquet 8, tel qu'illustré isolément sur les figures 5a et 5b, est à présent décrit en regard des figures 3, 4 et 6 à 8 en position solidaire du moyeu 11.

Chaque cliquet 8 est apte à pivoter et est configuré pour adopter deux positions :
- soit une position dite fermée (figures 3, 6 et 7) lorsque le cliquet 8 est engagé via son élément mâle 8A dans un creux 92B de la surface crantée 92 et donc verrouille en position le dispositif de centrifugation sur l'arbre ;
- soit une position dite ouverte (figures 4 et 8) lorsque le cliquet 8 est désengagé de la surface crantée 92, le dispositif de centrifugation étant déverrouillé de manière à pouvoir être descendu le long du moyeu 11 afin de le démonter.

Chaque cliquet 8 (figures 5a, 5b et 7) présente un corps de forme générale sensiblement parallélépipédique et oblong d'axe longitudinal X, s'étendant longitudinalement parallèlement au moyeu 11 en position fermée. Le corps présente une face longitudinale 80 dite intérieure en regard de l'intérieur du moyeu 11 (et donc en regard de la bague d'interface 9), une face longitudinale opposée 81 dite extérieure, une face inférieure 82, une face opposée supérieure 83 et des faces longitudinales latérales et opposées 84 et 85.

Chaque cliquet 8 est fixé à proximité de son extrémité inférieure dans l'épaisseur du moyeu 11 selon un axe de pivotement 88 perpendiculaire à l'axe longitudinal du moyeu. Le moyeu 11 comporte dans son épaisseur des lumières 11A (figures 3 et 4) logeant les cliquets 8. Du côté intérieur du moyeu 11, la lumière 11A garantit le passage d'un élément mâle 8A destiné à la coopération avec la surface crantée 92, et du côté extérieur, elle permet le basculement du cliquet dans sa position ouverte.

Chaque cliquet 8 comporte :
- une traverse inférieure 8A en saillie du reste du corps formant l'élément mâle, destinée à la coopération avec la surface crantée 92, en particulier en saillie de la face intérieure 80 et selon une direction perpendiculaire à l'axe longitudinal X du corps,
- une surface biseautée au niveau de sa face supérieure 83, l'inclinaison étant descendante depuis le bord supérieur 83A de la face intérieure 80 en direction de la face extérieure 81,
- un ergot 86 agencé en saillie par rapport à la face inférieure 82 et au niveau proximal du corps, qui ménage une cavité 87 adjacente à l'opposé de l'élément mâle 8A.

La traverse inférieure 8A (l'élément mâle) présente une géométrie de section en pointe pour coopérer avec les creux 92B de section triangulaire de la surface crantée 92.

La traverse inférieure 8A (l'élément mâle) présente une largeur (partie engagée dans l'élément mâle) de l'ordre de 10 mm et une hauteur de l'ordre de 1mm. Ces dimensions pourraient être plus importantes. Toutefois, elles s'avèrent suffisantes en considérant trois cliquets sur le moyeu 11 pour verrouiller le dispositif de centrifugation 1 de dimensions usuelles (moyeu présentant par exemple un diamètre extérieur de l'ordre de 140 mm et l'assiette de fibrage possédant par exemple un diamètre de 400 mm) et assurer au cours du temps sa tenue mécanique malgré la très grande vitesse de rotation.

Pour conduire à la position ouverte des cliquets 8 (figure 8), il est nécessaire d'appuyer sur la surface supérieure biseautée 83 de chaque cliquet de manière à faire pivoter chacun des cliquets en direction de l'intérieur du moyeu 11 de sorte à désengager l'élément mâle 8A hors de du creux 92B correspondant de la surface crantée 92.

Avantageusement, l'actionnement de la surface supérieure biseautée 83 d'un cliquet 8 est faite mécaniquement en venant en appui sur une butée supérieure 93, qui est la partie supérieure de la bague d'interface 9. Cette butée est périphérique sur la totalité de la circonférence de la bague. En combinaison, il est nécessaire que le cliquet 8 puisse basculer sans être gêné par le reste du corps de la bague 9 ; aussi, la bague 9 comporte en outre une gorge périphérique 94 bordée extérieurement par la butée 93 formant un épaulement par rapport à la gorge.

Pour assurer le déverrouillage total, c'est-à-dire garantir que les cliquets 8 restent en position ouverte et que l'on puisse redescendre la tulipe, les moyens élastiques 8B sont mis en oeuvre grâce à l'ergot 86 coopérant avec les moyens élastiques 8B.

En regard des figures 4, 7 et 8, les moyens élastiques 8B se présentent ici sous la forme d'un ressort à lame qui est fixé à la base du moyeu 11 et comprend un béquet 89 dirigé vers le haut et en face duquel est positionné l'ergot 86. Lorsque le cliquet 8 bascule (sens horaire), l'ergot 86 passe derrière le béquet 89 qui alors retient en position ouverte le cliquet. La descente de la tulipe peut alors être opérée.

Pour rebasculer les cliquets 8 en position fermée, l'opérateur appuie sur la partie inférieure de la face extérieure 81 des cliquets pour forcer l'ergot 86 de chaque cliquet à revenir au-delà du béquet élastique 89 du ressort à lame.

Le procédé de montage et démontage du dispositif de centrifugation de l'invention est à présent décrit.

Avant montage de la tulipe 10, les cliquets 8 sont actionnés pour les mettre en position fermée s'ils étaient ouverts (l'opérateur n'ayant qu'à appuyer sur chacune des faces extérieures 81 des cliquets.

L'opérateur a pris soin d'agencer une cale sous le brûleur 3, dont l'épaisseur correspond à la distance voulue de séparation du brûleur de l'assiette 6 une fois que sera montée la tulipe 10 portant l'assiette 6.

L'opérateur soulève la tulipe 10 avec l'assiette 6, en amenant la tulipe au droit de l'arbre 2 et de la bague d'interface 9. Il emmanche le moyeu 11 autour de la bague 9, et monte le moyeu en effectuant une translation verticale vers le haut, jusqu'à ce que les cliquets 8 viennent en grippe sur la surface crantée 92. La traverse inférieure 8A de chaque cliquet 8 s'engage dans le premier creux 92B (le plus inférieur) de la surface crantée ou la première rainure.

L'opérateur poursuit sa poussée verticale du dispositif de centrifugation 1 pour le monter cran par cran, chaque cliquet s'engageant successivement et concomitamment dans les creux successif de la surface crantée, sans pouvoir redescendre. La montée s'effectue jusqu'à un cran qui correspond au moment où l'assiette 6 butte contre la cale qui a été associée au brûleur. L'opérateur ne peut plus monter plus haut le dispositif.

Le dispositif de centrifugation 1 est alors à la hauteur souhaitée et est verrouillé. Le montage est terminé. La cale peut être retirée.

Le montage est par conséquent très simple et rapide de mise en oeuvre.

Pour démonter le dispositif de centrifugation 1, l'opérateur effectue un mouvement de poussée verticale sur le dispositif, pour poursuivre la montée des crans, jusqu'à ce que les cliquets 8 buttent par leur surface biseautée 83 sur la butée supérieure 93 de l'arbre, faisant pivoter les cliquets, en désengageant les traverses 8A (les éléments mâles) hors de la surface crantée 92 (figure 8), l'extrémité supérieure 83A des cliquets se logeant dans la gorge annulaire 94.

La surface biseautée 83 présente un angle d'inclinaison qui correspond à l'angle de basculement à imposer au cliquet pour que l'ergot 86 puisse passer derrière le béquet 89 des moyens élastiques 8B, et bloquer en position ouverte les cliquets 8.

Une fois les cliquets 8 en position ouverte et bloquée, les cliquets ne peuvent pas revenir en position fermée et donc se réengagés dans la surface crantée 92, l'opérateur peut alors tirer sur le dispositif de centrifugation 1 en le translatant de haut en bas jusqu'à le sortir hors de la bague d'interface 9.

Le démontage, par une simple opération de pousser-tirer, est terminé.

## Revendications

1. Dispositif de centrifugation interne (1) pour la formation de fibres, notamment de fibres minérales, comportant une assiette de fibrage (6) dotée d'une paroi périphérique (60) percée d'une pluralité d'orifices, un support (10) de l'assiette de fibrage (6) dénommé tulipe, la tulipe comprenant un corps cylindrique creux ou moyeu (11) et une jante (12) en forme de disque autour de l'extrémité inférieure du moyeu, et des moyens de fixation (8) agencés sur le moyeu et destinés à la fixation de la tulipe sur un arbre (2) apte à être rotatif, **caractérisé en ce que** les moyens de fixation comportent au moins deux éléments mâles (8A) isolés, coplanaires, en saillie de la paroi intérieure du moyeu (11) et constituent des moyens de retenue et de verrouillage mécanique du dispositif sur l'arbre (2) en position d'utilisation, chaque élément mâle (8A) étant destiné à coopérer avec un élément femelle (92B) de l'arbre (2) ou avec un élément femelle (92B) d'une bague d'interface (9) solidaire de l'arbre (2), par insertion de chaque élément mâle (8A) dans un élément femelle (92B), le dispositif comportant en outre des moyens élastiques (8B) permettant le déverrouillage du dispositif par rapport à l'arbre (2).

2. Dispositif selon la revendication 1, dans lequel les moyens de fixation (8) comportent au moins deux éléments mâles (8A) coplanaires, de préférence trois ou au moins trois, répartis à équidistance autour du moyeu (11), ou au moins deux pièces de fixation, de préférence trois ou au moins trois, réparties à équidistance sur la périphérie du moyeu (11), chaque pièce de fixation comprenant un élément mâle (8A) de retenue et de verrouillage.

3. Dispositif selon la revendication 1 ou 2, dans lequel les moyens de fixation (8) sont des pièces de fixation se présentant sous la forme de cliquets.

4. Dispositif selon l'une quelconque des revendications 2 à 3, dans lequel chaque pièce de fixation (8) est montée apte à être pivotante dans l'épaisseur du moyeu (11), le moyeu comportant des lumières (11A) pour le logement des pièces, chaque pièce étant apte à adopter deux positions, soit une position de repos, dite position fermée, pour laquelle la pièce est parallèle au corps longitudinal du moyeu, soit une position basculée, dite position ouverte, pour laquelle la pièce est pivotée et est angulairement orientée par rapport à l'axe longitudinal du moyeu, dans une direction opposée à l'axe.

5. Dispositif selon l'une quelconque des revendications 2 à 3, dans lequel chaque pièce de fixation (8) présente un corps oblong et comporte en son extrémité inférieure une traverse inférieure (8A) en saillie du corps et constituant l'élément mâle, de préférence en présentant une section en pointe.

6. Dispositif selon la revendication 4 ou 5, dans lequel chaque pièce de fixation (8) comporte en outre un moyen de blocage (86) de la pièce en position ouverte lorsque la pièce est basculée jusqu'à une certaine position angulaire, en particulier le moyen de blocage (86) est un ergot positionné sur la face inférieure de la pièce et à distance de l'élément mâle (8A).

7. Dispositif selon l'une quelconque des revendications 4 à 6, dans lequel les moyens élastiques (8B) de déverrouillage consistent en un ressort associé à chaque pièce de fixation (8) et apte à maintenir la pièce de fixation en position ouverte après son pivotement selon un certain angle via une coopération avec un moyen de blocage (86).

8. Dispositif selon la revendication précédente, dans lequel le ressort (8B) se présente sous la forme d'une lame avec un béquet (89), tandis que le moyen de blocage forme un ergot (86) apte à passer derrière le béquet (89) après le pivotement de la pièce de fixation (8) selon un certain angle et le béquet (89) retenant alors la pièce de fixation ouverte par butée de l'ergot (86) contre le béquet (89).

9. Dispositif selon l'une quelconque des revendications 2 à 6, dans lequel chaque pièce de fixation (8) comporte en son extrémité supérieure une surface biseautée (83) servant de surface d'appui destinée à coopérer avec une butée supérieure (93) solidaire de l'arbre (2) ou de la bague d'interface (9).

10. Ensemble de fibrage comprenant un arbre creux (2) apte à tourner à grande vitesse et un dispositif de centrifugation interne (1) pour la formation de fibres selon l'une quelconque des revendications précédentes, le dispositif étant fixé à l'arbre creux (2) via la tulipe (10), soit directement sur l'arbre (2), soit au moyen d'une bague d'interface (9) elle-même vissée autour de l'arbre (2), l'arbre (2) ou la bague d'interface (9) comportant sur leur paroi extérieure des éléments femelles (92B ; 95) coopérant avec les éléments mâles (8A).

11. Ensemble selon la revendication précédente, dans lequel les éléments femelles (92B) de la bague d'interface (9) ou de l'arbre (2) forment une surface crantée (92), du type à crémaillère ou en dents de scie, la surface crantée (92) étant en particulier pourvue d'une alternance de dents (92A) et de creux (92B) parallèles et de direction transversale à l'axe longitudinal de la bague (9) ou de l'arbre (2), les creux (92B) formant les éléments femelles, et la surface crantée (92) s'étendant de préférence selon l'axe longitudinal de l'arbre (2) ou de la bague (9) sur une distance de l'ordre de 15 mm.

12. Ensemble selon la revendication 10, dans laquelle, les éléments femelles (92B) de la bague d'interface (9) ou de l'arbre (2) sont disposés selon un pas constant dans des plans perpendiculaires à l'axe longitudinal de l'arbre (2) ou de la bague (9), chaque plan comprenant, soit un élément femelle continu circulaire, soit plusieurs éléments femelles discontinus et équidistants, le pas constant des éléments femelles de plans consécutifs étant de préférence compris entre 1 et 2 mm, notamment de l'ordre du millimètre.

13. Ensemble selon la revendication 11 ou 12, dans lequel, les dents (92A) et les creux (92B) de la bague d'interface (9) ou de l'arbre (2) présentent dans un plan vertical, une section à géométrie triangulaire, les pointes étant parallèles entre elles selon des plans horizontaux ou sensiblement inclinés vers le haut, tandis que les éléments mâles (8A) présentent une géométrie de coopération mutuelle avec les creux (92B).

14. Ensemble selon l'une quelconque des revendications 10 à 13, dans lequel, l'arbre (2) ou la bague d'interface (9) comporte sur le dessus, à distance des éléments femelles (92B) et dans un plan extérieur décalé par rapport au plan contenant lesdits éléments femelles, une gorge périphérique (94) à concavité tournée vers le bas qui délimite un épaulement constituant une butée haute (93) pour coopérer avec la partie supérieure des pièces de fixation (8), en particulier selon une surface supérieure biseautée (83) des pièces de fixation.

15. Utilisation d'un dispositif de centrifugation interne (1) pour la formation de fibres selon l'une des revendications 1 à 9 ou d'un ensemble de fibrage selon l'une des revendications 10 à 14, pour la fabrication de fibres, en particulier de fibres minérales.

## Patentansprüche

1. Interne Zentrifugierungsvorrichtung (1) zur Bildung von Fasern, insbesondere Mineralfasern, umfassend eine Faserziehplatte (6), versehen mit einer Umfangswand (60), die von einer Vielzahl von Öffnungen durchbohrt ist, einen als Tulpe bezeichneten Träger (10) der Faserziehplatte (6), wobei die Tulpe einen zylindrischen Hohlkörper oder eine Nabe (11) und eine scheibenförmige Felge (12) um das untere Ende der Nabe herum sowie Befestigungsmittel (8) beinhaltet, die auf der Nabe angeordnet und zur Befestigung der Tulpe auf einer drehbaren Welle (2) bestimmt sind, **dadurch gekennzeichnet, dass** die Befestigungsmittel mindestens zwei isolierte koplanare Einsteckelemente (8A) umfassen, die aus der Innenwand der Nabe (11) herausragen und Mittel zum Halten und mechanischen Verriegeln der Vorrichtung auf der Welle (2) in Gebrauchsstellung konstituieren, wobei jedes Einsteckelement (8A) dazu bestimmt ist, mit einem Aufnahmeelement (92B) der Welle (2) oder mit einem Aufnahmeelement (92B) eines mit der Welle (2) fest verbundenen Schnittstellenrings (9) durch Einführen jedes
Einsteckelements (8A) in ein Aufnahmeelement (92B) zusammenzuwirken, wobei die Vorrichtung ferner elastische Mittel (8B) umfasst, die die Entriegelung der Vorrichtung bezüglich der Welle (2) ermöglichen.

2. Vorrichtung nach Anspruch 1, wobei die Befestigungsmittel (8) mindestens zwei koplanare Einsteckelemente (8A), vorzugsweise drei oder mindestens drei, die äquidistant um die Nabe (11) herum verteilt sind, oder mindestens zwei Befestigungsteile, vorzugsweise drei oder mindestens drei, die äquidistant auf dem Umfang der Nabe (11) herum verteilt sind, umfassen, wobei jedes Befestigungsteil ein Einsteckelement (8A) zum Halten und Verriegeln beinhaltet.

3. Vorrichtung nach Anspruch 1 oder 2, wobei die Befestigungsmittel (8) Befestigungsteile sind, die in Form von Sperrklinken vorliegen.

4. Vorrichtung nach einem der Ansprüche 2 bis 3, wobei jedes Befestigungsteil (8) innerhalb der Dicke der Nabe (11) schwenkbar montiert ist, wobei die Nabe Langlöcher (11A) zur Aufnahme der Teile umfasst, wobei jedes Teil zwei Positionen einnehmen kann, entweder eine Ruheposition, die geschlossene Position, in der das Teil parallel zum Längskörper der Nabe vorliegt, oder eine gekippte Position, die offene Position, in der das Teil geschwenkt und bezüglich der Längsachse der Nabe in einer zur Achse entgegengesetzten Richtung abgewinkelt ausgerichtet ist.

5. Vorrichtung nach einem der Ansprüche 2 bis 3, wobei jedes Befestigungsteil (8) einen länglichen Körper aufweist und an seinem unteren Ende einen unteren Querträger (8A) umfasst, der aus dem Körper herausragt und das Einsteckelement, vorzugsweise einen spitzen Querschnitt aufweisend, konstituiert.

6. Vorrichtung nach Anspruch 4 oder 5, wobei jedes Befestigungsteil (8) ferner ein Mittel zum Blockieren (86) des Teils in offener Position umfasst, wenn das Teil bis zu einer bestimmten Winkelposition gekippt ist, wobei im Besonderen das Mittel zum Blockieren (86) ein Vorsprung ist, der an der Unterseite des Teils und in einem Abstand zum Einsteckelement (8A) positioniert ist.

7. Vorrichtung nach einem der Ansprüche 4 bis 6, wobei die elastischen Mittel (8B) zum Entriegeln aus einer Feder bestehen, die mit jedem Befestigungsteil (8) verbunden ist und geeignet ist, nach seinem Schwenken entsprechend einem bestimmten Winkel durch ein Zusammenwirken mit einem Mittel zum Blockieren (86), das Befestigungsteil in offener Position zu halten.

8. Vorrichtung nach dem vorstehenden Anspruch, wobei die Feder (8B) die Form eines Blatts mit einem Deckblatt (89) aufweist, während das Mittel zum Blockieren einen Vorsprung (86) bildet, der nach dem Schwenken des Befestigungsteils (8), entsprechend einem bestimmten Winkel, hinter das Deckblatt (89) treten kann, und wobei das Deckblatt (89) dann das Befestigungsteil durch Anschlag des Vorsprungs (86) gegen das Deckblatt (89) offen hält.

9. Vorrichtung nach einem der Ansprüche 2 bis 6, wobei jedes Befestigungsteil (8) an seinem oberen Ende eine abgeschrägte Oberfläche (83) aufweist, die als Auflageoberfläche dient und dazu bestimmt ist, mit einem oberen Anschlag (93) zusammenzuwirken, der fest mit der Welle (2) oder dem Schnittstellenring (9) verbunden ist.

10. Faserziehbaugruppe, beinhaltend eine Hohlwelle (2), die geeignet ist, sich mit hoher Geschwindigkeit zu drehen, und eine interne
Zentrifugierungsvorrichtung (1) zur Bildung von Fasern nach einem der vorstehenden Ansprüche, wobei die Vorrichtung an der Hohlwelle (2) durch die Tulpe (10) entweder direkt auf der Welle (2) oder mittels eines Schnittstellenrings (9) befestigt ist, der seinerseits um die Welle (2) herum aufgeschraubt ist, wobei die Welle (2) oder der Schnittstellenring (9) an ihrer Außenwand Aufnahmeelemente (92B; 95) umfassen, die mit den Einsteckelementen (8A) zusammenwirken.

11. Baugruppe nach dem vorstehenden Anspruch, wobei die Aufnahmeelemente (92B) des Schnittstellenrings (9) oder der Welle (2) eine gezahnte Oberfläche (92) der Zahnstangen- oder Sägezahnart bilden, wobei die gezahnte Oberfläche (92) im Besonderen mit einem Wechsel von Zähnen (92A) und Vertiefungen (92B) versehen ist, die parallel und in Querrichtung zur Längsachse des Rings (9) oder der Welle (2) vorliegen, wobei die Vertiefungen (92B) die Aufnahmeelemente bilden, und wobei sich die gezahnte Oberfläche (92) vorzugsweise entlang der Längsachse der Welle (2) oder des Rings (9) über eine Entfernung in der Größenordnung von 15 mm erstreckt.

12. Baugruppe nach Anspruch 10, wobei die Aufnahmeelemente (92B) des Schnittstellenrings (9) oder der Welle (2) mit konstantem Abstand in Ebenen senkrecht zur Längsachse der Welle (2) oder des Rings (9) angeordnet sind, wobei jede Ebene entweder ein kreisförmiges kontinuierliches Aufnahmeelement oder mehrere diskontinuierliche und äquidistante Aufnahmeelemente beinhaltet, wobei der konstante Abstand der Aufnahmeelemente der aufeinanderfolgenden Ebenen vorzugsweise im Bereich zwischen 1 und 2 mm, insbesondere im Millimeterbereich, liegt.

13. Baugruppe nach Anspruch 11 oder 12, wobei die Zähne (92A) und die Vertiefungen (92B) des Schnittstellenrings (9) oder der Welle (2) in einer vertikalen Ebene einen Querschnitt mit dreieckiger Geometrie aufweisen, wobei die Spitzen in horizontalen Ebenen parallel zueinander vorliegen oder wesentlich nach oben geneigt sind, während die Einsteckelemente (8A) eine Geometrie des gegenseitigen Zusammenwirkens mit den Vertiefungen (92B) aufweisen.

14. Baugruppe nach einem der Ansprüche 10 bis 13, wobei die Welle (2) oder der Schnittstellenring (9) auf der Oberseite in einer Entfernung zu den Aufnahmeelementen (92B) und in einer äußeren Ebene, die bezüglich der die Aufnahmeelemente enthaltenden Ebene versetzt ist, eine nach unten gerichtete Umfangsnut (94) mit einer Konkavität umfasst, die eine Schulter begrenzt, die einen oberer Anschlag (93) zum Zusammenwirken mit dem oberen Abschnitt der Befestigungsteile (8), im Besonderen entlang einer abgeschrägten oberen Oberfläche (83) der Befestigungsteile, konstituiert.

15. Verwendung einer internen Zentrifugierungsvorrichtung (1) zur Bildung von Fasern nach einem der Ansprüche 1 bis 9 oder einer Faserziehbaugruppe nach einem der Ansprüche 10 bis 14 zum Herstellen von Fasern, im Besonderen von Mineralfasern.

## Claims

1. An internal centrifuging device (1) for the formation of fibers, notably mineral fibers, including a fiberizing plate (6) having a peripheral wall (60) pierced by a plurality of orifices, a support (10) of the fiberizing plate (6) termed a tulip, the tulip comprising a hollow cylindrical body or hub (11) and a disk-shaped rim (12) around the lower end of the hub, and fixing means (8) arranged on the hub and intended for fixing the tulip to a shaft (2) able to rotate, **characterized in that** the fixing means include at least two coplanar isolated male elements (8A) projecting from the interior wall of the hub (11) and constitute means for retention and mechanical locking of the device to the shaft (2) in the position of use, each male element (8A) being intended to cooperate with a female element (92B) of the shaft (2) or with a female element (92B) of an interface ring (9) fastened to the shaft (2), by insertion of each male element (8A) in a female element (92B), the device further including elastic means (8B) enabling unlocking of the device relative to the shaft (2).

2. The device as claimed in claim 1, in which the fixing means (8) include at least two coplanar male elements (8A), preferably three or at least three in number, distributed equidistantly around the hub (11), or at least two fixing pieces, preferably three or at least three in number, equidistantly distributed on the periphery of the hub (11), each fixing piece comprising a retaining and locking male element (8A).

3. The device as claimed in claim 1 or 2, in which the fixing means (8) are fixing means taking the form of pawls.

4. The device as claimed in either one of claims 2 or 3, in which each fixing piece (8) is mounted to be able to pivot within the thickness of the hub (11), the hub including openings (11A) for housing the pieces, each piece being able to adopt two positions, i.e. a rest position, termed a closed position, in which the piece is parallel to the longitudinal body of the hub, or a pivoted position, termed the open position, in which the piece is pivoted and is angularly oriented relative to the longitudinal axis of the hub, in a direction away from the axis.

5. The device as claimed in either one of claims 2 or 3, in which each fixing piece (8) has an oblong body and includes at its lower end a lower crossmember (8A) projecting from the body and constituting the male element, preferably having a pointed section.

6. The device as claimed in claim 4 or 5, in which each fixing piece (8) further includes means (86) for locking the piece in the open position when the piece is pivoted to a certain angular position, in particular the blocking means (86) consist of a lug positioned on the lower face of the piece and at a distance from the male element (8A).

7. The device as claimed in any one of claims 4 to 6, in which the unlocking elastic means (8B) consist of a spring associated with each fixing piece (8) and adapted to hold the fixing piece in the open position after it pivots by a certain angle via cooperation with locking means (86).

8. The device as claimed in the preceding claim, in which the spring (8B) takes the form of a leaf spring with a nose (89), while the locking means form a lug (86) able to pass behind the nose (89) after the fixing piece (8) has pivoted by a certain angle and the nose (89) then holding the fixing piece open by abutment of the lug (86) against the nose (89).

9. The device as claimed in any one of claims 2 to 6, in which each fixing piece (8) includes at its upper end a beveled surface (83) serving as a bearing surface intended to cooperate with an upper abutment (93) fastened to the shaft (2) or to the interface ring (9).

10. A fiberizing system comprising a hollow shaft (2) able to turn at high speed and an internal centrifuging device (1) as claimed in any one of the preceding claims for the formation of fibers, the device being fixed to the hollow shaft (2) via la tulip (10), either directly to the shaft (2), or by means of an interface ring (9) itself screwed around the shaft (2), the shaft (2) or the interface ring (9) including on their exterior wall female elements (92B ; 95) cooperating with the male elements (8A).

11. The system as claimed in the preceding claim, in which the female elements (92B) of the interface ring (9) or of the shaft (2) form a notched surface (92), of the rack or sawtooth type, the notched surface (92) being in particular provided with alternating teeth (92A) and hollows (92B) parallel and of transverse direction relative to the longitudinal axis of the ring (9) or of the shaft (2), the recesses (92B) forming the female elements, and the notched surface (92) preferably extending along the longitudinal axis of the shaft (2) or of the ring (9) over a distance of the order of 15 mm.

12. The system as claimed in claim 10, in which the female elements (92B) of the interface ring (9) or of the shaft (2) are disposed at a constant pitch in planes perpendicular to the longitudinal axis of the shaft (2) or of the ring (9), each plane comprising either a continuous circular female element or a plurality of discontinuous and equidistant female elements, the constant pitch of the female elements of consecutive planes being preferably between 1 and 2 mm inclusive, notably of the order of one millimeter.

13. The system as claimed in claim 11 or 12, in which the teeth (92A) and the recesses (92B) of the interface ring (9) or of the shaft (2) have in a vertical plane a section of triangular geometry, the points being parallel to one another in horizontal or substantially upwardly inclined planes, while the male elements (8A) have a geometry of mutual cooperation with the recesses (92B).

14. The system as claimed in any one of claims 10 to 13, in which the shaft (2) or the interface ring (9) includes on the top at a distance from the female elements (92B) in an exterior plane offset relative to the plane containing said female elements a peripheral groove (94) with the concave side facing downward that delimits a shoulder constituting a top abutment (93) to cooperate with the upper part of the fixing pieces (8), in particular on a beveled upper surface (83) of the fixing pieces.

15. The use of an internal centrifuging device (1) as claimed in any one of claims 1 to 9 for the formation of fibers or of a fiber formation system as claimed in any one of claims 10 to 14 for the fabrication of fibers, in particular mineral fibers.
